(19) Europäisches Patentamt
European Patent Office
Office européen des brevets

(11) Publication number: 0 400 875 B1

(12) # EUROPEAN PATENT SPECIFICATION

(45) Date of publication of patent specification: **22.09.93 Bulletin 93/38**

(51) Int. Cl.[5]: **C09D 5/14**, A01N 43/80

(21) Application number: **90305580.4**

(22) Date of filing: **22.05.90**

(54) **Mildew resistant paint compositions.**

(30) Priority: **02.06.89 US 360504**

(43) Date of publication of application: **05.12.90 Bulletin 90/49**

(45) Publication of the grant of the patent: **22.09.93 Bulletin 93/38**

(84) Designated Contracting States: **AT BE CH DE DK ES FR GB GR IT LI LU NL SE**

(56) References cited:
**US-A- 4 031 055**
**PATENT ABSTRACTS OF JAPAN, unexamined applications, C section, vol. 11, no. 267, August 28, 1987 THE PATENT OFFICE JAPANESE GOVERNMENT page 161 C 443**

(73) Proprietor: **ROHM AND HAAS COMPANY**
**Independence Mall West**
**Philadelphia Pennsylvania 19105 (US)**

(72) Inventor: **Lesota, Stanley**
**720 Inverness Drive**
**Horsham, Pennsylvania 19044 (US)**

(74) Representative: **Angell, David Whilton et al**
**ROHM AND HAAS (UK) LTD. European Operations Patent Department Lennig House**
**2 Mason's Avenue**
**Croydon CR9 3NB (GB)**

EP 0 400 875 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

This invention concerns paint compositions which contain isothiazolone compounds in order to impart mildew resistance.

Isothiazolones are well known mildewcides for film forming compositions. Isothiazolones are generally unstable without the addition of a stabilizer. In aqueous paint formulations, zinc oxide is a well known stabilizer for isothiazolones, and also acts as a synergist with the isothiazolones for mildew resistance in aqueous paint formulations. This is disclosed in US-A-4031055. One problem with zinc oxide as a stabilizer is that it must be used in high concentrations, usually about 50,000 ppm of zinc oxide based on the paint formulations. Other metal salts have also been used as stabilizers for isothiazolones in mildew resistant paint compositions, but some compositions , e.g., those with copper, are highly coloured.

US-A-4,783,221 teaches blends of isothiazolones with at least one metal salt of an organic carboxylic acid of at least six carbon atoms, wherein the metal is a transition metal, zinc, mercury, antimony, or lead, and also with a solvent diluent. The patent is directed to wood preservative compositions and does not teach or suggest use in paint compositions, nor is there any suggestion of enhanced stability of the isothiazolones.

The present invention provides in one aspect a paint composition comprising a film-forming, non-wood penetrating, organic polymeric paint vehicle; one or more isothiazolones of the formula:

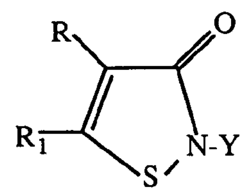

wherein

Y is a $(C_1-C_{18})$alkyl or $(C_3-C_{12})$, preferably $(C_5-C_8)$, cycloalkyl each optionally substituted with one or more of hydroxy, halo, cyano, alkylamino, dialkylamine, arylamino, carboxy, carbalkoxy, alkoxy, aryloxy, alkylthio, haloalkoxy, cycloalkylamino, carbamoxy, or isothiazolonyl; an unsubstituted or halo-substituted $(C_2-C_8)$, preferably $(C_2-C_4)$ alkenyl or alkynyl; a $(C_7-C_{10})$aralkyl optionally substituted with one or more of halogen, $(C_1-C_4)$alkyl or $(C_1-C_4)$alkoxy; or an aryl optionally substituted with one or more of halogen, nitro, $(C_1-C_4)$alkyl, $(C_1-C_4)$alkyl-acylamino, carb$(C_1-C_4)$alkoxy or sulfamyl;

R is hydrogen, chloro, or methyl, and $R_1$ is hydrogen or methyl; and from 1000 to 10000 ppm of a water-insoluble, organic solvent-soluble, zinc salt of an organic carboxylic acid.

In another aspect, the invention provides a method of imparting mildew resistance to a paint, comprising incorporating therewith a composition comprising one or more isothiazolones as defined above, a water-insoluble organic solvent-soluble zinc salt of an organic carboxylic acid, and optionally a solvent, such that the concentration of zinc salt in said paint is from 100 to 10000 ppm.

In a further aspect, the invention provides a method of stabilizing an isothiazolone mildewcide in a paint composition which comprises incorporating therewith from 1,000 to 10,000 ppm, based on said paint composition, of a water-insoluble, organic solvent soluble zinc salt of an organic carboxylic acid.

The paint compositions of the present invention avoid the potential colour problems caused by the use of previous metal salt stabilizers, and are effectively stabilized with lower concentrations of metal salt stabilizers than is required with zinc oxide pigments.

The isothiazolones useful in the invention are well known and are described in U.S. -A-3,523,121 and 3,761,488. A highly preferred isothiazolone is 2-octyl-3-isothiazolone. It has been found that some chlorinated isothiazolones are not stabilized by the oil soluble zinc compounds used in this invention.

The zinc salts useful in this invention are preferably saturated or unsaturated aliphatic or cycloaliphatic acids of at least 6 carbon atoms. The most preferred zinc salts are zinc naphthenate and especially zinc octoate (also known as zinc octanoate); "octoate" is a commonly used term which is equivalent to 2-ethylhexanoate. Others which are suitable are zinc hexanoate, heptanoate, decanoate, dodecanoate, dodecenoate, cyclohexylcarboxylate, tetrahydrobenzoate, 2-ethylhexanoate, neodecanoate, oleate, benzoate, alkanoate (mixture of about $(C_7-C_{13})$ alkyl carboxylates), salts of disproportionated rosin acid (abietic, pimaric acids), 2-phenylethanoate, and the like.

Solvents may be used to dissolve the isothiazolones and may be any organic solvent which is miscible with the isothiazolones, is compatible with the proposed end use, does not destabilize the isothiazolone, and does not react with the zinc compound to eliminate its stabilizing action.

Hydroxylic solvents, for example, polyols, such as glycols, monoethers of glycols, alcohols, and the like, may be used. An hydroxylic coalescent, such as Texanol (trimethyl-1,3-pentanediol monoisobutyrate) also may be used. In certain formulations, hydrocarbons, either aliphatic or aromatic, are useful solvents. Typical solvents are dipropylene glycol, dipropylene glycol monoethyl ether, xylene, mineral spirits, and the like. Solvents may be used in admixture as long as the zinc compound remains soluble or is well dispersed enough so as to be added conveniently and uniformly to the formulation.

The amounts of zinc compound employed will vary depending on use conditions and concentrations of the isothiazolone in the mixture. In more concentrated solutions, effective amounts of zinc compound based on isothiazolone are in the ratios of generally from about 1:50 to about 2:1. Obviously higher amounts may be used, but at additional cost. At high levels of dilution of the isothiazolone (such as from 1 to 2 percent isothiazolone in the solvent), the ratio of stabilizer to isothiazolone can range from about 1:10 to about 3:1.

Other salt stabilizers such as those described in U.S.-A-3,870,795; 4,067,878; 4,150,026 and 4,241,214 can also be included.

Because the preferred isothiazolones and the stabilizers of the present invention are both organic solvent-soluble and water-insoluble, they may be used in aqueous dispersions or latices, as both will diffuse into the organic polymer and be efficacious when the polymer is isolated by drying of the latex to form a film. The preferred isothiazolones and stabilizers of the present invention may also be used in oil or alkyd paint formulations.

It is known in the art that the performance of microbicides can frequently be enhanced by combination with one or more other microbicides. In fact, there have been numerous examples of synergistic combinations. Thus, other known microbicides may be combined advantageously with the stabilized isothiazolones of this invention.

The isothiazolone and zinc compound may be separately blended into the paint or, preferably, the isothiazolone and the zinc compound, with or without organic solvent, may be pre-combined into a single package or solution before being added to the paint. The single package combination of isothiazolone, zinc compound, and optional organic solvent offers the advantage of improved control of the ratio of isothiazolone to zinc compound being added to the paint since a single operation is involved rather than the several steps involved when each ingredient is added separately; in addition, the paint formulator will require only one storage vessel for single-package formulations, rather than the several which would be required if each component were to be supplied separately; also, a one-step operation is inherently simpler than the multistep process of adding each ingredient separately where the chance for spillage or error is increased.

The relative proportions of isothiazolone, zinc compound and optional solvent generally range from 0.01 to 99.9999 parts isothiazolone, 0.0001 to 99.99 parts zinc compound, and optionally 40 to 99.9899 parts solvent. Preferred are 5 to 40 parts isothiazolone and 60 to 95 parts zinc compound. A particularly preferred formulation range is 1 to 25 parts isothiazolone, 0.1 to 10 parts zinc compound, 65 to 98.9 parts solvent.

The following examples illustrate a few embodiments of the present invention. All percentages are by weight unless otherwise specified.

EXAMPLE 1 - (Comparative) - Paint Formulation Free of Zinc Oxide.

| Material | g/liter |
|---|---|
| Natrosol 250 MHR hydroxyethyl cellulose | 3.6 |
| Ethylene glycol | 30 |

Premix

| | |
|---|---|
| Water | 134.4 |
| Tamol 960 (40%) poly(methacrylic acid) | 8.6 |
| Potassium tripolyphosphate | 1.8 |
| Triton CF-10 surfactant | 3.1 |
| Colloid 643 defoamer | 1.2 |
| Propylene glycol | 40.8 |
| Ti-Pure R-902 titanium dioxide | 270 |
| Minex 4 filler pigment | 191.3 |
| Icecap K filler pigment | 60 |
| Attagel 50 clay | 6 |

Let Down

The mixture is milled for 10 to 15 minutes in a Cowles Dissolver at 3800-4500 rpm and the following ingredients are then added at slower speed as follows:

| | |
|---|---|
| Film Forming acrylic copolymer | 367.1 |
| Colloid 643 | 3.6 |
| Texanol coalescent | 11.3 |
| Mildewcide components | |
| Ammonia (28%) | 2.8 |
| Natrosol 250 MHR (2.5%) | 128.4 |
| Water | 130.8 |
| Total | 1394.9 |

EXAMPLE 2 - Zinc Octoate Stabilization

This example illustrates zinc octoate stabilization of the paint formulation of Example 1. The isothiazolone mildewcide from the above formulations, or a control in which no zinc octoate is present, is admixed with the paint so as to introduce a certain ppm of the zinc cation to the paint. The stabilizer is well-mixed into the paint, and the paint then heat-aged at 60°C for 10 days. The samples, along with a room temperature control, separately shown to have retained essentially all of the active ingredient (a.i.), were extracted with a 9-fold volume excess of propylene glycol with intensive shaking for one minute and slower shaking for one hour. High-pressure liquid chromatography (Varian Model 5500 chromatograph and ultraviolet detector) was used to identify the amount of a.i. A level of a.i. above 75% retention is judged acceptable for commercial storage. Duplicate results are found on repeat samplings of the same experiment.

It will be understood that the proportion of zinc compound present in ppm is greater than the zinc cation content (ppm Zn), since its molecular weight is of course greater. Thus in the case of zinc octoate, 240 ppm Zn (MW = 65) corresponds to 1259 ppm zinc octoate (MW = 341).

TABLE 1

| Concentration in Paint 2-n-octylisothiazolone ppm | Zn Octoate (ppm Zn) | Aging Results % a.i. retained |
|---|---|---|
| 850 | 0 | 0, 35 |
| 850 | 240 | 49 |
| 850 | 480 | 88, 92 |

EXAMPLE 3 - (Comparative)

Example 2 was repeated except that 4,5-dichloro-2-n-octylisothiazolone was substituted for the 2-n-octylisothiazolone. No stabilization is seen at the use levels studied.

While the invention has been described with reference to specific examples and applications, other modifications and uses for the invention will be apparent to those skilled in the art.

## Claims

1. A paint composition comprising:
   a) a film-forming, non-wood penetrating, organic polymeric paint vehicle;
   b) one or more isothiazolones of the formula:

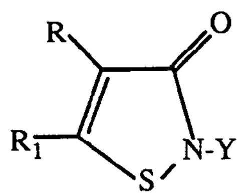

wherein

Y is a ($C_1$-$C_{18}$)alkyl or ($C_3$-$C_{12}$), preferably ($C_5$-$C_8$), cycloalkyl each optionally substituted with one or more of hydroxy, halo, cyano, alkylamino, dialkylamine, arylamino, carboxy, carbalkoxy, alkoxy, aryloxy, alkylthio, haloalkoxy, cycloalkylamino, carbamoxy, or isothiazolonyl; an unsubstituted or halo-substituted ($C_2$-$C_8$), preferably ($C_2$-$C_4$) alkenyl or alkynyl; a ($C_7$-$C_{10}$)aralkyl optionally substituted with one or more of halogen, ($C_1$-$C_4$)alkyl or ($C_1$-$C_4$)alkoxy; or an aryl optionally substituted with one or more of halogen, nitro, ($C_1$-$C_4$)alkyl, ($C_1$-$C_4$)alkyl-acylamino, carb($C_1$-$C_4$)alkoxy or sulfamyl;

R is hydrogen, chloro, or methyl, and $R_1$ is hydrogen or methyl; and

c) from 1000 to 10000 ppm of a water-insoluble, organic solvent-soluble zinc salt of an organic carboxylic acid.

2. Method of imparting mildew resistance to a paint comprising incorporating therewith a composition comprising one or more isothiazolones of the formula

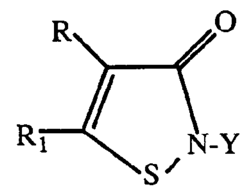

as defined in Claim 1, a water-insoluble organic solvent-soluble zinc salt of an organic carboxylic acid, and optionally a solvent, such that the concentration of zinc salt in said paint is from 1000 to 10000 ppm.

3. Method according to Claim 2 wherein the composition comprises from 0.01 to 99.9999 parts, preferably from 5 to 40 parts of said isothiazolone, and from 0.0001 to 99.99 parts, preferably from 60 to 95 parts of said zinc salt, and optionally from 40 to 99.9899 parts of a solvent.

4. Method according to Claim 3 wherein the composition comprises from 1 to 25 parts of isothiazolone, from 0.1 to 10 parts of zinc salt and from 65 to 98.9 parts of the solvent.

5. Method according to Claim 3 or 4 wherein the solvent comprises an aliphatic hydrocarbon, aromatic hydrocarbon, dihydric alcohol, or a monoalkyl ether of a dihydric alcohol.

6. Method of stabilizing an isothiazolone mildewcide in a paint composition comprising incorporating therewith from 1,000 to 10,000 ppm, based on said paint composition, of a water-insoluble, organic solvent soluble, zinc salt of an organic carboxylic acid.

7. Composition or method according to any preceding Claim wherein the ratio of zinc salt to isothiazolone is from 1:50 to 3:1.

8. Composition or method according to any preceding Claim wherein said isothiazolone is 2-octyl-3-isothiazolone.

9. Composition or method according to any preceding Claim wherein said zinc salt is a salt of a saturated or unsaturated aliphatic or cycloaliphatic acid of at least six carbon atoms.

10. Composition or method according to any preceding Claim wherein said zinc salt is zinc hexanoate, heptanoate, decanoate, dodecanoate, dodecenoate, cyclohexylcarboxylate, tetrahydrobenzoate, 2-ethylhexanoate, neodecanoate, oleate, benzoate, alkanoate, a salt of disproportionated rosin acid, or 2-phenylethanoate

11. Composition or method according to any preceding Claim wherein said zinc salt is zinc octoate or zinc naphthenate.

**Patentansprüche**

1. Lackzusammensetzung enthaltend
   a) ein filmbildendes, Holz nicht durchdringendes:, organisches, polymeres Lackbindemittel,
   b) ein oder mehrere Isothiazolone der Formel

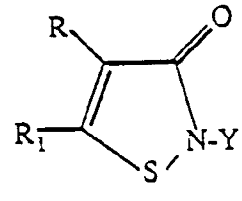

in der Y ist ein ($C_1$-$C_{18}$)-Alkyl oder ($C_3$-$C_{12}$)-, vorzugsweise ($C_5$-$C_8$)-Cycloalkyl, jeweils gegebenenfalls substituiert mit einem oder mehreren von Hydroxy, Halogen, Cyano, Alkylamino, Dialkylamin,

Arylamino, Carboxy, Carbalkoxy, Alkoxy, Aryloxy, Alkylthio, Haloalkoxy, Cycloalkylamino, Carbamoxy oder Isothiazolonyl, ein unsubstituiertes oder mit Halogen substituiertes ($C_2$-$C_8$)-, vorzugsweise ($C_2$-$C_4$)-Alkenyl oder Alkynyl, ein ($C_7$-$C_{10}$)-Aralkyl, gegebenenfalls substituiert mit einem oder mehreren von Halogen, ($C_1$-$C_4$)-Alkyl oder ($C_1$-$C_4$)-Alkoxy, oder ein Aryl, gegebenenfalls substituiert mit einem oder mehreren von Halogen, Nitro, ($C_1$-$C_4$)-Alkyl, ($C_1$-$C_4$)-Alkyl-acylamino, Carb($C_1$-$C_4$)-Alkoxy oder Sulfamyl, R ist Wasserstoff, Chlor oder Methyl, und $R_1$ ist Wasserstoff oder Methyl und

c) von 1000 bis 10000 ppm eines wasserunlöslichen, in organischem Lösemittel löslichem Zinksalz einer organischen Carbonsäure.

2. Verfahren zum schimmelbeständigen Ausrüsten eines Lackes durch Einbringen einer Zusammensetzung, die ein oder mehrere Isothiazolone der Formel

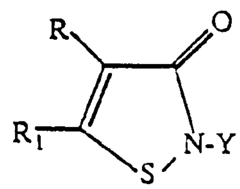

wie in Anspruch 1 angegeben, ein wasserunlösliches, in organischem Lösemittel lösliches Zinksalz einer organischen Carbonsäure und gegebenenfalls ein Lösemittel enthält, so daß die Konzentration des Zinksalzes im Lack von 1000 bis 10000 ppm beträgt.

3. Verfahren nach Anspruch 2,
**dadurch gekennzeichnet,**
daß die Zusammensetzung von 0,01 bis 99,9999 Teile, vorzugsweise von 5 bis 40 Teile, des Isothiazolons und von 0,0001 bis 99,99 Teile, vorzugsweise von 60 bis 95 Teile, des Zinksalzes und gegebenenfalls von 40 bis 99,9899 Teile eines Lösemittels enthält.

4. Verfahren nach Anspruch 3,
**dadurch gekennzeichnet,**
daß die Zusammensetzung von 1 bis 25 Teile Isothiazolon, von 0,1 bis 10 Teile Zinksalz und von 65 bis 98,9 Teile des Lösemittels enthält.

5. Verfahren nach Anspruch 3 oder 4,
**dadurch gekennzeichnet,**
daß das Lösemittel einen aliphatischen Kohlenwasserstoff, aromatischen Kohlenwasserstoff, zweiwertigen Alkohol oder einen Monoalkylether eines zweiwertigen Alkohols enthält.

6. Verfahren zum Stabilisieren eines Schimmelwachstum hemmenden Isothiazolons in einer Lackzusammensetzung durch Einbringen von 1.000 bis 10.000 ppm, bezogen auf Lackzusammensetzung, eines wasserunlöslichen, in organischem Lösemittel löslichen Zinksalzes einer organischen Carbonsäure.

7. Zusammensetzung oder Verfahren nach einem der vorstehenden Ansprüche,
**dadurch gekennzeichnet,**
daß das Verhältnis von Zinksalz:Isothiazolon von 1:50 bis 3:1 beträgt.

8. Zusammensetzung oder Verfahren nach einem der vorstehenden Ansprüche,
**dadurch gekennzeichnet,**
daß das Isothiazolon 2-Octyl-3-isothiazolon ist.

9. Zusammensetzung oder Verfahren nach einem der vorstehenden Ansprüche,
**dadurch gekennzeichnet,**
daß das Zinksalz ein Salz einer gesättigten oder ungesättigten aliphatischen oder cycloaliphatischen Säure mit mindestens sechs Kohlenstoffatomen ist.

10. Zusammensetzung oder Verfahren nach einem der vorstehenden Ansprüche,
**dadurch gekennzeichnet,**

daß das Zinksalz Zinkhexanoat, Heptanoat, Decanoat, Dodecanoat, Dodecenoat, Cyclohexylcarboxylat, Tetrahydrobenzoat, 2-Ethylhexanoat, Neodecanoat, Oleat, Benzoat, Alkanoat, ein Salz von disproportionierter Harzsäure oder 2-Phenylethanoat ist.

**11.** Zusammensetzung oder Verfahren nach einem der vorstehenden Ansprüche,
**dadurch gekennzeichnet,**
daß das Zinksalz Zinkoctoat oder Zinknaphthenat ist.

## Revendications

**1.** Une composition de peinture comprenant :
a) un véhicule de peinture polymère, organique, ne pénétrant pas dans le bois et formant une pellicule ;
b) une ou plusieurs isothiazolones de formule :

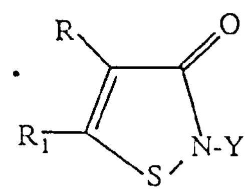

dans laquelle :
Y est un alcoyl en $C_1$-$C_{18}$ ou un cycloalcoyl en $C_3$-$C_{12}$ , de préférence en $C_5$-$C_8$ , chacun éventuellement substitué par un ou plusieurs parmi hydroxy, halo, cyano, alcoylamino, dialcoylamino , arylamino, carboxy, carbalcoxy, alcoxy, aryloxy, alcoylthio, haloalcoxy, cycloalcoylamino, carbamoxy ou isothiazolonyl; un alcényl ou alcynyl en $C_2$-$C_8$ , de préférence en $C_2$-$C_4$ , non substitué ou halo-substitué ; un aralcyl en $C_7$-$C_{10}$, éventuellement substitué par un ou plusieurs parmi halogène , alcoyl en $C_1$-$C_4$ ou alcoxy en $C_1$-$C_4$ ; ou un aryl, éventuellement substitué par un ou plusieurs parmi halogène, nitro , alcoyl en $C_1$-$C_4$, alcoyl ( en $C_1$-$C_4$)-acylamino , carb (en $C_1$-$C_4$) alcoxy ou sulfamyl; R est hydrogène, chloro ou méthyl, et $R_1$ est hydrogène ou méthyl; et
c) de 1000 à 10000 ppm d'un sel de zinc, insoluble dans l'eau , mais soluble dans les solvants organiques , d'un acide carboxylique organique .

**2.** Méthode pour impartir une résistance au mildiou à une peinture comprenant l'incorporation dans celle-ci d'une composition comprenant une ou plusieurs isothiazolones de formule :

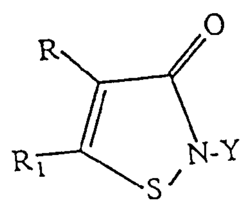

telle que définie dans la revendication 1 , un sel de zinc, insoluble dans l'eau , mais soluble dans les solvants organiques, d'un acide carboxylique organique , et éventuellement un solvant , la concentration du sel de zinc dans ladite peinture étant comprise entre 1000 et 10.000 ppm.

**3.** Méthode selon la revendication 2 dans laquelle la composition comprend de O,O1 à 99,9999 , de préférence de 5 à 40 parties , de ladite isothiazolone , et de 0,0001 à 99,99 parties , de préférence de 6O à 95 parties , dudit sel de zinc, et éventuellement de 4O à 99,9899 parties d'un solvant .

**4.** Méthode selon la revendication 3 dans laquelle la composition comprend de 1 à 25 parties d'isothiazolone , de O,1 à 10 parties de sel de zinc et de 65 et 98,9 parties de solvant .

**5.** Méthode selon la revendication 3 ou 4 dans laquelle le solvant comprend un hydrocarbure aliphatique, un hydrocarbure aromatique , un alcool dihydrique ou un éther monoalcoylé d'un alcool dihydrique .

6. Méthode pour stabiliser un mildioucide à base d'isothiazolone dans une composition de peinture comprenant l'incorporation dans celle-ci de 1.000 à 10.000 ppm, sur la base de ladite composition de peinture , d'un sel de zinc, insoluble dans l'eau , mais soluble dans les solvants organiques , d'un acide carboxylique organique .

7. Composition ou méthode selon l'une quelconque des revendications précédentes dans laquelle le rapport du sel de zinc à l'isothiazolone est de 1:5O à 3:1.

8. Composition ou méthode selon l'une quelconque des revendications précédentes dans laquelle ladite isothiazolone est la 2-octyl-3-isothiazolone.

9. Composition ou méthode selon l'une quelconque des revendications précédentes dans laquelle ledit sel de zinc est un sel d'un acide aliphatique ou cycloaliphatique , saturé ou non saturé , ayant au moins six atomes de carbone .

10. Composition ou méthode selon l'une quelconque des revendications précédentes dans laquelle ledit sel de zinc est un hexanoate, heptanoate, décanoate, dodécanoate , dodécènoate, cyclohexylcarboxylate , tétrahydrobenzoate, 2-éthylhexanoate, néodécanoate, oléate, benzoate, alcanoate de zinc , un sel de l'acide colophanique disproportionné ou du 2-phényléthanoate.

11. Composition ou méthode selon l'une quelconque des revendications précédentes dans laquelle ledit sel de zinc est l'octoate de zinc ou le naphténate de zinc .